# EUROPÄISCHE PATENTSCHRIFT

(11) **EP 3 586 326 B1**
(45) Veröffentlichungstag und Bekanntmachung des Hinweises auf die Patenterteilung: **01.05.2024**
(21) Anmeldenummer: 18703967.2
(22) Anmeldetag: 05.02.2018
(51) Int. Cl.: G08G 1/16, G05D 1/02, G08G 1/0967

(54) **SYSTEM UND VERFAHREN ZUR SICHEREN UND EFFIZIENTEN BEREITSTELLUNG VON ZUMINDEST TEILAUTONOMEN FAHRMODI**
SYSTEM AND METHOD FOR THE SECURE AND EFFICIENT PROVISION OF AT LEAST PARTLY AUTOMATED DRIVING MODES
SYSTÈME ET PROCÉDÉ POUR LA MISE À DISPOSITION SÛRE ET EFFICACE DE MODES DE CONDUITE AU MOINS SEMI-AUTONOMES

(30) Priorität: 24.02.2017 DE 102017203022
(43) Veröffentlichungstag der Anmeldung: 01.01.2020
(73) Patentinhaber: Bayerische Motoren Werke Aktiengesellschaft, 80809 München (DE)
(72) Erfinder: JURK, Reinhard, 82194 Groebenzell (DE)
(86) Internationale Anmeldenummer: PCT/EP2018/052777
(87) Internationale Veröffentlichungsnummer: WO 2018/153644

(56) Entgegenhaltungen:
- EP-A1- 2 858 039
- DE-A1-102012 021 282
- DE-A1-102014 013 672
- DE-A1-102015 002 405

## Beschreibung

Die vorliegende Erfindung betrifft ein System und Verfahren zur sicheren und effizienten Bereitstellung von zumindest teil-autonomen Fahrmodi für Fahrzeuge.

Druckschrift DE 10 2014 013 672 A1 offenbart ein Verfahren zur Absicherung eines autonomen oder teilautonomen Betriebs von Fahrzeugen auf einem Verkehrsstreckennetz, bei dem ein oder mehrere Fahrzeuge das Verkehrsstreckennetz befahren, die Fahrzeuge jeweils Sensoren zur Erfassung einer Umgebung, eine digitale Straßenkarte des Verkehrsstreckennetzes, eine Kommunikationseinheit zur Kommunikation mit einem externen Server und eine Auswerteeinheit aufweisen. Das Verfahren zeichnet sich dadurch aus, dass die Auswerteeinheit auf Basis der erfassten Umgebung und der digitalen Straßenkarte für eine vom jeweiligen Fahrzeug zurückgelegte Strecke S eine Information IG zur Geeignetheit dieser Strecke S für einen autonomen oder teilautonomen Betrieb von Fahrzeugen ermittelt, die Auswerteeinheit die Information IG mittels der Kommunikationseinheit an den externen Server übermittelt, der externe Server eine Erlaubnisinformation El zur Zulässigkeit der Strecke S für den autonomen oder teilautonomen Betrieb von Fahrzeugen abhängig von der Information IG ermittelt, und der externe Server die Erlaubnisinformation EI an die Fahrzeuge übermittelt. Druckschrift DE 10 201 5 002 405 A1 offenbart ein Verfahren zur Verkehrskoordinierung von Kraftfahrzeugen in einer Parkumgebung, der eine zentrale Recheneinrichtung und an die zentrale Recheneinrichtung Sensordaten liefernde, die Parkumgebung überwachende Sensoren zugeordnet sind und auf dem Server ein Kartendatensatz der Parkumgebung abgelegt ist, wobei die zentrale Recheneinrichtung zur räumlichen und zeitlichen Koordination des Verkehrs in der Parkumgebung ausgebildet ist, indem durch Überwachung unter Auswertung wenigstens der Sensordaten aktuelle, die Positionen von innerhalb der Parkumgebung betriebenen Kraftfahrzeugen umfassende Verkehrslagedaten der Parkumgebung ermittelt und für die in der Parkumgebung betriebenen Kraftfahrzeuge jeweils unter Berücksichtigung der Verkehrslagedaten, des Kartendatensatzes sowie von für andere Kraftfahrzeuge ermittelten räumlichen und zeitlichen Sollkorridore als Eingangsdaten ein räumlicher und zeitlicher Sollkorridor zu einem Zielort des Kraftfahrzeugs ermittelt und an das jeweilige Kraftfahrzeug übermittelt wird. Fahrzeuge, die zumindest teil-autonome Fahrmodi unterstützen, sind bekannt. Sie können eine Vielzahl an Sensoren umfassen, die für die Ausführung von zumindest teilautonomen Fahrmodi erforderlich sind. Zu den Sensoren gehören Systeme zur Objekterfassung wie z.B. Kameras, Abstandsmessungssysteme, etc., die während des Fahrbetriebs kontinuierlich Daten sammeln. Diese Daten können dann entsprechend im Fahrzeug und außerhalb des Fahrzeugs (sog. "Backend" bzw. im folgenden auch Server) aggregiert werden, um die Funktionalität eines entsprechenden (teil-) autonomen Fahrmodus bereitstellen zu können bzw. um die Steuerung des Fahrzeuges zu übernehmen bzw. anderen Fahrzeugen die Information zur Verfügung zu stellen, damit diese entsprechende (teil-) autonome Fahrfunktionen ausführen können. Zu den Daten, die durch die Sensoren erfasst werden, können weitere Daten aus einer digitalen Straßenkarte zur Bereitstellung des entsprechenden (teil-) autonomen Fahrmodus verarbeitet werden. Diese Daten können durch aktuelle Daten hinsichtlich zeitaktueller Situationen im Straßenverkehr (z.B. Stau, Unfälle) und/oder zeitaktuelle Umwelteinflüsse (z.B. Glatteis), die beispielsweise über einen Server bereitgestellt werden, ergänzt werden. Nachteilig dabei ist, dass bei einer großen Anzahl an Fahrzeugen mit einem (teil-) autonomen Fahrmodus im Straßenverkehr die Datenmenge, die über die Luftschnittstelle - in der Regel über das Mobilfunknetz - an diese Fahrzeuge übertragen werden muss, sehr groß werden kann und somit die Kapazitäten des Mobilfunknetzes überstiegen werden kann bzw. hohe Kosten für die Datenübertragung anfallen. Darüber hinaus ist bei der Bereitstellung von zumindest einem (teil-) autonomen Fahrmodus nicht berücksichtigt, dass beispielsweise aufgrund eines technischen Defekts oder aufgrund einer Fehlfunktion in der IT-Sicherheitsfunktionen des Fahrzeugs (z.B. Hacker-Angriff) der (teil-) autonome Fahrmodus fehlerhaft sein und somit eine Gefahr für den Fahrer und andere Verkehrsteilnehmer darstellen kann.

Die Aufgabe der Erfindung besteht darin, die vorstehend genannten Nachteile zu vermeiden und eine Lösung zu schaffen, die eine sichere und gleichzeitig effiziente Bereitstellung von zumindest teilautonomen Fahrmodi für Fahrzeuge ermöglicht.

Diese Aufgabe wird erfindungsgemäß durch die Merkmale der unabhängigen Ansprüche gelöst. Bevorzugte Ausführungsformen sind Gegenstand der abhängigen Ansprüche.

Gemäß einem ersten Aspekt der Erfindung wird ein Verfahren zur sicheren und effizienten Bereitstellung von zumindest einem zumindest teil-autonomen Fahrmodus eines Fahrzeugs bereitgestellt, umfassend:
Erstellen eines Requests durch das Fahrzeug zum Abrufen einer Autorisierung einer Durchführung des zumindest einen zumindest teil-autonomen Fahrmodus;
Empfangen des Requests an einem Server;
Prüfen der Autorisierung der Durchführung des zumindest einen zumindest teilautonomen Fahrmodus;
   - wobei das Prüfen (330) der Autorisierung das Prüfen, ob ein Sicherheitsproblem mit Bezug auf das Fahrzeug (110) vorliegt, umfasst; und
   - wobei das Sicherheitsproblem mit Bezug auf das Fahrzeug (110) die Kompromittierung von zumindest einem Steuergerät durch einen vorangegangenen Hacker-Angriff umfasst;
Erstellen von der Prüfung entsprechenden Autorisierungsdaten; und
Erstellen einer Response umfassend die Autorisierungsdaten; und
Empfangen und Auswerten der Response im Fahrzeug.

Das Fahrzeug bzw. Kraftfahrzeug kann beispielsweise eine Steuereinheit umfassen, die einrichtet ist, das Fahrzeug in einem teil- bzw. vollautonomen Fahrmodus ohne bzw. mit nur beschränktem Eingreifen des Fahrers des Fahrzeug zu bewegen. Beispielsweise kann die Steuereinheit eingerichtet sein, das Fahrzeug von einem Startpunkt einer (Teil-) Fahrstrecke zum Endpunkt einer (Teil-) Fahrstrecke autonom zu bewegen. Die Steuereinheit (oder jede andere geeignete Steuereinheit im Fahrzeug, die kommunikativ mit der Steuereinheit zum Bewegen des Fahrzeugs verbunden ist), kann ausgebildet sein, einen Request bzw. eine Anfrage zum Abrufen einer Autorisierung der Durchführung des zumindest einen zumindest teilautonomen Fahrmodus (im Folgenden zur Vereinfachung autonomer Fahrmodus genannt) erstellen und beispielsweise über ein Mobilfunksystem an einen Server bzw. Backendserver senden. Der Übersichtlichkeit halber wird das vorliegende Verfahren nur mit Bezug auf einen Server erläutert, es kann sich allerdings dabei auch um eine beliebige Kombination von Servern und/oder weiterer geeigneter Module handeln. Bei einem teilautonomen Fahrmodus kann dieser situationsbedingt auf bestimmte Strecken und/oder Straßenkategorien beschränkt sein, z.B. ein teilautonomer Fahrmodus kann auf Autobahnfahrten beschränkt sein, ein andere auf Fahrten in der Stadt, etc.

Der Request kann entsprechend geeignete Daten umfassen, wie z.B. eine Identifikation (ID) des Fahrzeugs, eine Position des Fahrzeugs, etc. Nachdem der adressierte Server den Request empfängt, kann er die Daten aus dem Request extrahieren und bearbeiten. Insbesondere wird bei der Bearbeitung eine Autorisierung des Fahrzeugs zum Ausführen des autonomen Fahrmodus geprüft. Beispielsweise kann der Server durch Abfragen von in einer Speichereinheit hinterlegten Daten und/oder durch Anfordern entsprechender Daten von einem anderen Server überprüfen, ob
- ein Sicherheitsproblem mit Bezug auf das Fahrzeug vorliegt, wie z.B. die Kompromittierung von einem oder mehreren Steuergeräten durch einen vorangegangenen Hacker-Angriff und/oder eine bekanntgewordene Schwachstelle in der Systemauslegung;
- das Fahrzeug typbedingt für den beabsichtigten autonomen Fahrmodus autorisiert ist; und/oder
- das Fahrzeug individuell für den beabsichtigten autonomen Fahrmodus autorisiert ist. Die Autorisierung kann beispielsweise im Falle eines nutzungsabhängigen Produktangebots umfassend eine oder mehrere (teil-) autonome Fahrfunktion/en für einen vorbestimmten Zeitraum erforderlich sein.

Basierend auf der Bearbeitung bzw. Überprüfung durch den Server kann der Server entsprechende Autorisierungsdaten erstellen und eine Response bzw. Antwort an das Fahrzeug generieren, welche die Autorisierungsdaten umfasst. Die Response wird über das Mobilfunksystem bzw. Mobilfunknetz an das Fahrzeug übertragen und (beispielsweise durch die o.g. Steuereinheit) in geeigneter Weise verarbeitet.

Vorzugsweise umfassen die Autorisierungsdaten eine Autorisierungsbestätigung oder eine Autorisierungsverweigerung, wobei das Auswerten der Response im Fahrzeug umfasst:
falls die Autorisierungsdaten eine Autorisierungsbestätigung umfassen: Ausführen bzw. Fortführen des zumindest einen zumindest teil-autonomen Fahrmodus im Fahrzeug; und
falls die Autorisierungsdaten einen Autorisierungsverweigerung umfassen: Verweigern oder Abbrechen des zumindest einen zumindest teil-autonomen Fahrmodus im Fahrzeug.

Mit Bezug auf das o.g. Beispiel können die Autorisierungsdaten eine Autorisierungsbestätigung umfassen, wenn festgestellt wurde, dass
- kein Sicherheitsproblem mit Bezug auf das Fahrzeug vorliegt; und/oder
- das Fahrzeug typbedingt für den beabsichtigten autonomen Fahrmodus autorisiert ist; und/oder
- das Fahrzeug individuell für den beabsichtigten autonomen Fahrmodus autorisiert ist.

Falls ein Sicherheitsproblem vorliegt und/oder das Fahrzeug nicht (typbedingt oder individuell) für den beabsichtigten Fahrmodus autorisiert ist, umfassen die Autorisierungsdaten eine Autorisierungsverweigerung.

Umfassen die Autorisierungsdaten der Response eine Autorisierungsbestätigung, kann der autonome Fahrmodus (beispielsweise durch die o.g. Steuereinheit) aus- bzw. fortgeführt werden (je nachdem, ob der autonome Fahrmodus bereits ausgeführt wird). Umfassen die Autorisierungsdaten hingegen eine Autorisierungsverweigerung, kann der autonome Fahrmodus verweigert bzw. abgebrochen werden (je nachdem, ob der autonome Fahrmodus bereits ausgeführt wird).

Vorzugsweise umfasst das Verfahren zudem die folgenden Schritte:
Berechnen, durch den Server, einer Nutz-Datenmenge für Nutzdaten der Response, wobei die Nutz-Datenmenge die Differenz zwischen den Gesamt-Nutzdaten und den Autorisierungsdaten der Response ist;
Anfordern von Nutzdaten für die Response, wobei die angeforderten Nutzdaten der berechneten Nutz-Datenmenge entsprechen;
wobei die Response zu den Autorisierungsdaten die angeforderten Nutzdaten enthält; und
wobei das Auswerten der Response im Fahrzeug zudem das Auswerten der Nutzdaten umfasst.

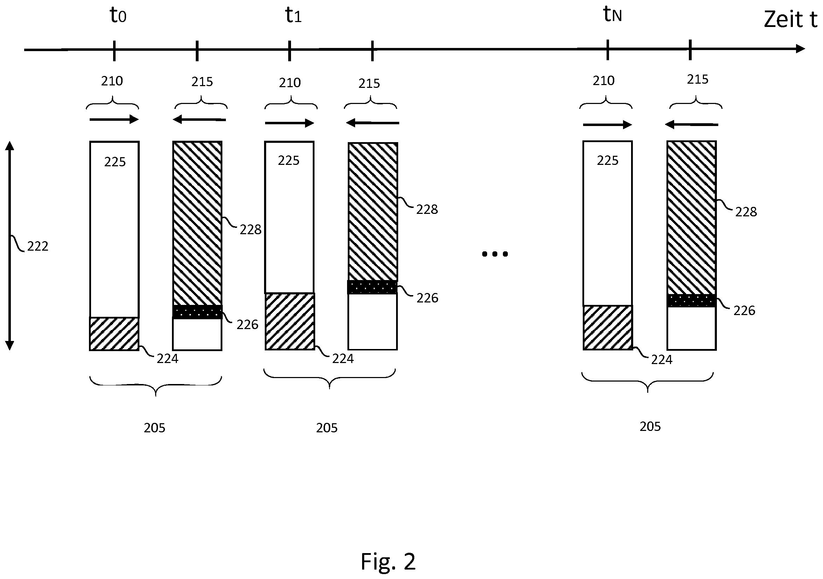

Bei dem Request kann es sich um einen Datenblock einer vordefinierte Länge bzw. Größe M handeln, der die erforderlichen Daten zur Autorisierungsanfrage umfasst, wobei der Rest des Datenblocks mit so genannten Dummy-Bits aufgefüllt werden kann (so genanntes Padding). Die Verwendung von Datenblöcken einer vordefinierbaren Länge ist üblich bei der Datenübertragung gängiger Mobilfunksysteme (so genannte Blockrundung). Entsprechend kann nun der Server berechnen, welche Nutzdatenmenge für den der Response entsprechenden Datenblock zur Verfügung steht, wie mit Bezug auf **Figur 2** beschrieben. Insbesondere ist die Nutzdatenmenge die Differenz der für die Response insgesamt verfügbare Datenmenge im Datenblock abzüglich der Datenmenge, die den Autorisierungsdaten entspricht. Entsprechend der berechneten Nutz-Datenmenge kann nun der Server Nutzdaten aus einer Datenbank abfragen und/oder von anderen Servern abrufen.

Beim Erstellen der Response durch den Server kann der entsprechende Datenblock zu den Autorisierungsdaten die angeforderten Nutzdaten enthalten. Falls die an das Fahrzeug zu übertragenden Nutzdaten die berechnete Nutz-Datenmenge übersteigen, kann vom Server eine Session bzw. Sitzung aufgebaut werden und gleichzeitig vorgemerkt werden, dass mit der aktuellen Response nicht alle Nutzdaten übertragen werden konnten. In diesem Fall werden die restlichen Nutzdaten mit einer oder mehreren nachfolgenden Responses versendet.

Vorzugsweise umfassen die Nutzdaten ein oder mehrere der folgenden Daten:
Daten hinsichtlich einer Aktualisierung einer im Fahrzeug vorgehaltenen digitalen Straßenkarte;
Daten hinsichtlich zeitaktueller Situationen im Straßenverkehr;
Daten hinsichtlich zeitaktueller Umwelteinflüsse; und/oder
weitere geeignete Daten.

Vorzugsweise erfolgt das Erstellen des Requests zu vordefinierbaren Ereignissen wie beispielsweise in regelmäßigen zeitlichen (z.B. jede Minute) oder geometrischen (z.B. alle 1 km) Abständen.

Um die Fahrsicherheit bei der Durchführung des autonomen Fahrmodus zu gewährleisten, kann die Erstellung des Autorisierungs-Requests durch das Fahrzeug zu vordefinierten bzw. vordefinierbaren Ereignissen erfolgen. Beispielsweise:
- vor jeder manuellen Aktivierung des autonomen Fahrmodus durch den Fahrer;
- vor jeder automatischen Aktivierung des autonomen Fahrmodus durch ein entsprechendes Steuergerät;
- in regelmäßigen zeitlichen (z.B. jede Minute) und/oder geometrischen (z.B. alle 1 km) Abständen, wobei die Abstände situationsbedingt (z.B. Autobahnfahrt vs. Fahrt in der Innenstadt) variieren können; und/oder
- zu jedem anderen geeigneten Zeitpunkt.

Vorzugsweise erfolgt, wenn das Erstellen des Requests durch das Fahrzeug nicht zu den vordefinierbaren bzw. vordefinierten Ereignissen möglich ist, das Ausführen bzw. Fortführen des zumindest einen zumindest teil-autonomen Fahrmodus im Fahrzeug situationsbedingt für einen vorbestimmten Zeit- und/oder Ortsraum.

Es kann beispielsweise aufgrund einer Nicht-Verfügbarkeit des Mobilfunknetzes (z.B. Tunnel, überlastetes Mobilfunknetz), dazu kommen, dass das Erstellen des Requests durch das Fahrzeug zum notwendigen bzw. rechtzeitigen Zeitpunkt nicht erfolgen kann. In diesem Fall kann der autonome Fahrmodus (falls anwendbar: situationsbedingt, z.B. wenn sich der ausgeführte teilautonome Fahrmodus auf Autobahnfahrten/innerstädtische Fahrten beschränkt und die Fahrt auf der Autobahn fortgeführt wird) für einen vorbestimmten Zeitraum (z.B. 1 Minute (min), 2 min, 5 min etc.) und/oder Ortsraum (z.B. alle 1 Kilometer (km), alle 2 km, alle 5 km, etc.) ausgeführt bzw. fortgeführt werden (je nachdem, ob der autonome Fahrmodus bereits ausgeführt wird). Dabei kann der vorbestimmte Zeit- und/oder Ortsraum der Fortführung situationsbedingt parametrisiert werden. Beispielsweise kann der vorbestimmte Zeitraum und/oder Ortsraum bei Autobahnfahrten länger und bei innerstädtischen Fahrten kürzer gewählt werden, beispielsweise da auf Autobahnen eine geringere Gefahr von einem eigentlich nicht mehr berechtigten Fahrzeug ausgeht.

Gemäß einem zweiten Aspekt der vorliegenden Erfindung wird die zugrunde liegende Aufgabe durch ein System zur sicheren und effizienten Bereitstellung von zumindest einem zumindest teil-autonomen Fahrmodus eines Fahrzeugs gelöst, umfassend:
zumindest einen Server zum
   - Empfangen eines vom Fahrzeug erstellten Requests zum Abrufen einer Autorisierung einer Durchführung des zumindest einen zumindest teil-autonomen Fahrmodus von dem Fahrzeug;
   - Prüfen der Autorisierung der Durchführung des zumindest einen zumindest teilautonomen Fahrmodus des Fahrzeugs,
      ▪ wobei das Prüfen (330) der Autorisierung das Prüfen, ob ein Sicherheitsproblem mit Bezug auf das Fahrzeug (110) vorliegt, umfasst; und
      ▪ wobei das Sicherheitsproblem mit Bezug auf das Fahrzeug (110) die Kompromittierung von zumindest einem Steuergerät durch einen vorangegangenen Hacker-Angriff umfasst;
   - Erstellen von der Prüfung entsprechenden Autorisierungsdaten; und
   - Erstellen einer Response umfassend die Autorisierungsdaten;
   zumindest ein Fahrzeug zum Empfangen und Auswerten der Response.

Vorzugsweise umfassen die Autorisierungsdaten eine Autorisierungsbestätigung oder eine Autorisierungsverweigerung, wobei das Auswerten der Response umfasst:
falls die Autorisierungsdaten eine Autorisierungsbestätigung umfassen: Ausführen bzw. Fortführen des zumindest einen zumindest teil-autonomen Fahrmodus im Fahrzeug; und
falls die Autorisierungsdaten einen Autorisierungsverweigerung umfassen: Verweigern oder Abbrechen des zumindest einen zumindest teil-autonomen Fahrmodus im Fahrzeug.

Vorzugsweise umfasst das Erstellen der Response durch den Server zudem:
Berechnen einer Nutz-Datenmenge für Nutzdaten der Response, wobei die Nutz-Datenmenge die Differenz zwischen den Gesamt-Nutzdaten und den Autorisierungsdaten der Response ist;
Anfordern von Nutzdaten für die Response, wobei die angeforderten Nutzdaten der berechneten Nutz-Datenmenge entsprechen;
wobei die Response zu den Autorisierungsdaten die angeforderten Nutzdaten enthält; und
wobei das Auswerten der Response im Fahrzeug zudem das Auswerten der Nutzdaten umfasst.

Vorzugsweise umfassen die Nutzdaten ein oder mehrere der folgenden Daten:
Daten hinsichtlich einer Aktualisierung einer im Fahrzeug (110) vorgehaltenen digitalen Straßenkarte;
Daten hinsichtlich zeitaktueller Situationen im Straßenverkehr;
Daten hinsichtlich zeitaktueller Umwelteinflüsse.

Vorzugsweise erstellt das Fahrzeug den Request zu vordefinierten Ereignissen, wobei, wenn das Erstellen des Requests durch das Fahrzeug nicht zu den vordefinierten Ereignissen möglich ist, das Ausführen bzw. Fortführen des zumindest einen zumindest teil-autonomen Fahrmodus im Fahrzeug situationsbedingt für einen vorbestimmten Zeit- und/oder Ortsraum erfolgt.

Diese und andere Aufgaben, Merkmale und Vorteile der vorliegenden Erfindung werden aus dem Studium der folgenden detaillierten Beschreibung bevorzugter Ausführungsformen und der beiliegenden Figuren verdeutlicht. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt ein beispielhaftes System zur sicheren und effizienten Bereitstellung von zumindest einem zumindest teil-autonomen Fahrmodus eines Fahrzeugs;
- **Fig. 2**: zeigt beispielhafte Request-Response-Paare, die zwischen dem Fahrzeug und dem Server über das Mobilfunknetz ausgetauscht werden;
- **Fig. 3**: zeigt ein beispielhaftes Verfahren zur sicheren und effizienten Bereitstellung von zumindest einem zumindest teil-autonomen Fahrmodus eines Fahrzeugs.

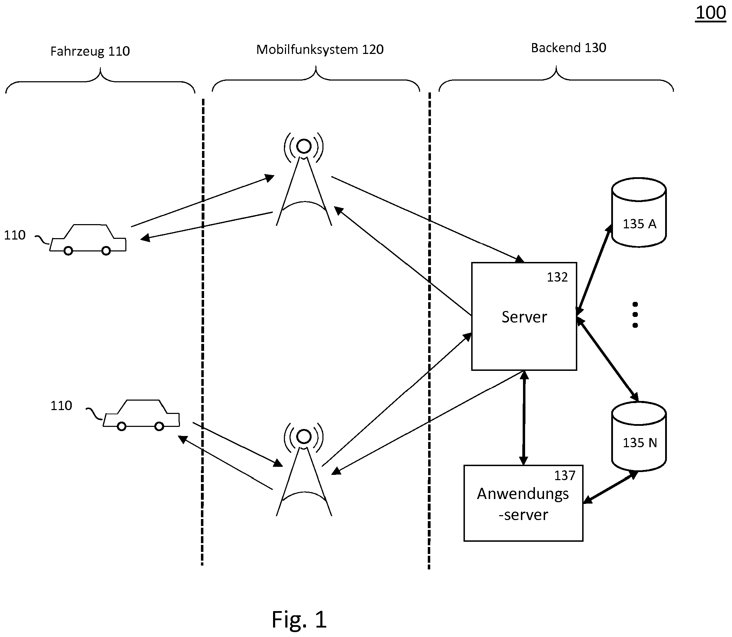

**Figur 1** zeigt ein beispielhaftes System 100 zur sicheren und effizienten Bereitstellung von zumindest einem zumindest teil-autonomen Fahrmodus eines Fahrzeugs 110 bzw. Kraftfahrzeugs 110. Das Fahrzeug 110 kann beispielsweise eine Steuereinheit (nicht gezeigt) umfassen, die eingerichtet ist, das Fahrzeug 110 in einem teil- bzw. vollautonomen Fahrmodus ohne bzw. mit nur beschränktem Eingreifen des Fahrers des Fahrzeugs 110 zu bewegen. Beispielsweise kann die Steuereinheit eingerichtet sein, das Fahrzeug 110 von einem Startpunkt einer (Teil-) Fahrstrecke zum Endpunkt der (Teil-) Fahrstrecke autonom zu bewegen. Die Steuereinheit (oder jede andere geeignete Steuereinheit im Fahrzeug 110, die kommunikativ mit der Steuereinheit zum Bewegen des Fahrzeugs verbunden ist), kann ausgebildet sein, einen Request bzw. eine Anfrage 210 zum Abrufen einer Autorisierung der Durchführung des zumindest einen zumindest teilautonomen Fahrmodus (im Folgenden zur Vereinfachung autonomer Fahrmodus genannt) erstellen und beispielsweise über ein Mobilfunksystem bzw. Mobilfunknetz 120 senden. Die Kommunikation zwischen dem Fahrzeug 110 und dem Server 132 im Backend 130 kann zur weiteren Erhöhung der Sicherheit mittels einer Public-Key-Infrastruktur bzw. Public-Key-Infrastructure (PKI, nicht gezeigt) zur Überprüfung der Vertrauenswürdigkeit des Servers 132 und/oder des Fahrzeugs 110 umfassend eine Trusted-Third-Party TTP erfolgen.

Das Fahrzeug 110 kann eine Anfrage bzw. Request 210 (wie weiter unten mit Bezug auf **Figur 2** erläutert) zum Abrufen einer Autorisierung einer Durchführung des zumindest einen zumindest teil-autonomen Fahrmodus erstellen. Das Fahrzeug 110 kann den Request 210 zu vordefinierbaren bzw. vordefinierten Ereignissen erstellen. Um die Fahrsicherheit bei der Durchführung des autonomen Fahrmodus des Fahrzeugs 110 zu gewährleisten, kann die Erstellung des (Autorisierungs-) Requests 210 durch das Fahrzeug 110 beispielsweise erfolgen (und somit kann das vordefinierte bzw. vordefinierbare Ereignis beispielsweise umfassen):
- vor jeder manuellen Aktivierung des autonomen Fahrmodus durch den Fahrer;
- vor jeder automatischen Aktivierung des autonomen Fahrmodus durch ein entsprechendes Steuergerät (z.B. nach Auffahrt auf eine Autobahn, um einen autonomen Fahrmodus auf der Autobahn zu initiieren);
- in regelmäßigen zeitlichen Abständen t₀, t₁, ..., t_{N} (vgl. **Figur 2****);** und/oder
- zu jedem anderen geeigneten Zeitpunkt.

Dabei kann festgelegt werden, dass, falls die Erstellung des Requests 210 durch das Fahrzeug 110 nicht zu den vordefinierbaren bzw. vordefinierten Ereignissen möglich ist, das Ausführen bzw. Fortführen des zumindest einen zumindest teil-autonomen Fahrmodus im Fahrzeug 110 situationsbedingt für einen vorbestimmten Zeit- und/oder Ortsraum erfolgt. Es kann beispielsweise aufgrund einer Nicht-Verfügbarkeit des Mobilfunknetzes (z.B. Tunnel, Netzüberlastung), dazu kommen, dass das Erstellen des Requests 210 durch das Fahrzeug 110 zum notwendigen bzw. rechtzeitigen Zeitpunkt nicht erfolgen kann. In diesem Fall kann der autonome Fahrmodus (falls anwendbar: situationsbedingt, z.B. wenn sich der ausgeführte teilautonome Fahrmodus auf Autobahnfahrten/innerstädtische Fahrten beschränkt und die Fahrt auf der Autobahn fortgeführt wird) für einen vorbestimmten Zeitraum (z.B. 1 Minute (min), 2 min, 5 min etc.) und/oder Ortsraum (z.B. alle 1 Kilometer (km), alle 2 km, alle 5 km, etc.) ausgeführt bzw. fortgeführt werden (je nachdem, ob der autonome Fahrmodus bereits ausgeführt wird). Dabei kann der vorbestimmte Zeit- und/oder Ortsraum der Fortführung situationsbedingt parametrisiert werden. Beispielsweise kann der vorbestimmte Zeitraum und/oder Ortsraum bei Autobahnfahrten länger und bei innerstädtischen Fahrten kürzer gewählt werden, beispielsweise da auf Autobahnen eine geringere Gefahr von einem eigentlich nicht mehr berechtigten Fahrzeug ausgeht.

Der Request bzw. Autorisierungs-Request 210 kann entsprechend geeignete Daten 224 umfassen, wie z.B. eine Identifikation (ID) des Fahrzeugs 110, eine Position des Fahrzeugs 110, etc. Bei dem Request 210 kann es sich um einen Datenblock einer vordefinierten Länge bzw. Größe M 222 handeln, der die geeigneten bzw. erforderlichen Daten zur Autorisierungsanfrage 224 (z.B. ID des Fahrzeugs 110, Position des Fahrzeugs 110) umfasst. Die Verwendung von Datenblöcken einer vordefinierbaren bzw. vordefinierten Länge M 222 ist üblich bei der Datenübertragung gängiger Mobilfunksysteme 120 (so genannte Blockrundung).

Nachdem der adressierte Server 132 den Request 210 über das Mobilfunksystem bzw. Mobilfunknetz 120 empfängt, kann der Server 132 die geeigneten Daten 224 (z.B. ID des Fahrzeugs 110, Position des Fahrzeugs 110) aus dem Request-Datenblock 210 extrahieren und bearbeiten. Insbesondere wird bei der Bearbeitung des Requests bzw. Request-Datenblocks 210 die Autorisierung des Fahrzeugs 110 zum Ausführen des autonomen Fahrmodus geprüft. Beispielsweise kann der Server 132 durch Abfragen von in einer Speichereinheit 135A ... 135N hinterlegten Daten und/oder durch Anfordern entsprechender Daten von einem oder mehreren weiteren Anwendungs-bzw. Applikationsservern 137 überprüfen, ob
- ein Sicherheitsproblem mit Bezug auf das Fahrzeug 110 vorliegt;
- das Fahrzeug 110 typbedingt für den beabsichtigten autonomen Fahrmodus autorisiert ist; und/oder
- das Fahrzeug 110 individuell für den beabsichtigten autonomen Fahrmodus autorisiert ist.

Diese Daten können beispielsweise für alle Fahrzeuge, die zumindest einen zumindest teilautonomen Fahrmodus aufweisen, in einer oder mehreren Datenbanken 135 A ... 135 N beispielsweise nach einem geeigneten Registrierungsprozess über ein oder mehrere entsprechend geeignete Registrierungsserver (nicht gezeugt) hinterlegt sein.

Nach der Prüfung der Autorisierung des Fahrzeugs 110 zum Ausführen des autonomen Fahrmodus kann der Server 132 Autorisierungsdaten 226 für die Response bzw. den Response -Datenblock 215 erstellen. Die Autorisierungsdaten 226 können eine Autorisierungsbestätigung oder eine Autorisierungsverweigerung umfassen. Beispielsweise
können die Autorisierungsdaten 226 eine Autorisierungsbestätigung umfassen, wenn festgestellt wurde, dass
- kein Sicherheitsproblem mit Bezug auf das Fahrzeug 110 vorliegt; und/oder
- das Fahrzeug 110 typbedingt für den beabsichtigten autonomen Fahrmodus autorisiert ist; und/oder
- das Fahrzeug individuell für den beabsichtigten autonomen Fahrmodus autorisiert ist.

Falls ein Sicherheitsproblem vorliegt und/oder das Fahrzeug 110 nicht (typbedingt oder individuell) für den beabsichtigten Fahrmodus autorisiert ist, umfassen die Autorisierungsdaten 226 eine Autorisierungsverweigerung.

Das Bearbeiten des Requests 210 durch den Server 132 kann auch ein Berechnen einer Nutz-Datenmenge für Nutzdaten 228 des Response-Datenblocks 215, umfassen. Diese Nutz-Datenmenge kann die Differenz zwischen den Gesamt-Nutzdaten (226+228) und den Autorisierungsdaten 226 der Response 215 sein. Der Server 132 kann daraufhin Nutzdaten 228 für die Response bzw. den Response-Datenblock 215 von ein oder mehreren Speichereinheiten (135 A ... 135 N) bzw. weiteren Applikationsservern 137 anfordern, wobei die angeforderten Nutzdaten 228 der berechneten Nutz-Datenmenge entsprechen. Bei den Nutzdaten 228 kann es sich beispielsweise um ein oder mehrere der folgenden Daten bzw. Datentypen handeln:
Daten hinsichtlich einer Aktualisierung einer im Fahrzeug 110 vorgehaltenen digitalen Straßenkarte (z.B. neue Baustellen, neue Straßenführung, etc.);
Daten hinsichtlich zeitaktueller Situationen im Straßenverkehr (z.B. aktuelle Verkehrslage, aktuelle Unfälle, aktuelle Straßensperren, etc.);
Daten hinsichtlich zeitaktueller Umwelteinflüsse (z.B. Blitzeis, starke Windböen, etc.); und/oder
weitere geeignete Daten.

Beim Erstellen der Response bzw. des Response-Datenblocks 215 durch den Server 132 kann der entsprechende Datenblock 215 zu den Autorisierungsdaten 226 die angeforderten Nutzdaten 228 umfassen. Falls die zu übertragenden Nutzdaten 228 die berechnete Nutz-Datenmenge übersteigen, kann vom Server eine Session aufgebaut werden und gleichzeitig vorgemerkt werden, dass mit der aktuellen Response 215 nicht alle Nutzdaten 218 übertragen werden konnten. In diesem Fall werden die restlichen Nutzdaten mit einer oder mehreren nachfolgenden Responses 215 versendet.

Die Response bzw. der Response-Datenblock 215 wird nun an das Fahrzeug 110 über das Mobilfunknetz bzw. Mobilfunksystem 120 gesendet. Das Fahrzeug 110 Empfängt die Response 215 und wertet diese entsprechend aus. Umfassen die Autorisierungsdaten 226 der Response 215 eine Autorisierungsbestätigung, kann der autonome Fahrmodus (beispielsweise durch die o.g. Steuereinheit) aus- bzw. fortgeführt werden, je nachdem, ob der autonome Fahrmodus bereits ausgeführt wird. Umfassen die Autorisierungsdaten 226 hingegen eine Autorisierungsverweigerung, kann der autonome Fahrmodus verweigert bzw. abgebrochen werden, je nachdem, ob der autonome Fahrmodus bereits ausgeführt wird. Werden mit der Response 215 auch Nutzdaten 228 empfangen, können diese entsprechend zur Ausführung des autonomen Fahrmodus verarbeitet werden (z.B. Aktualisierung der digitalen Karte, Aktualisierung zeitaktueller Situationen im Straßenverkehr und/oder Aktualisierung zeitaktueller Umwelteinflüsse, etc.).

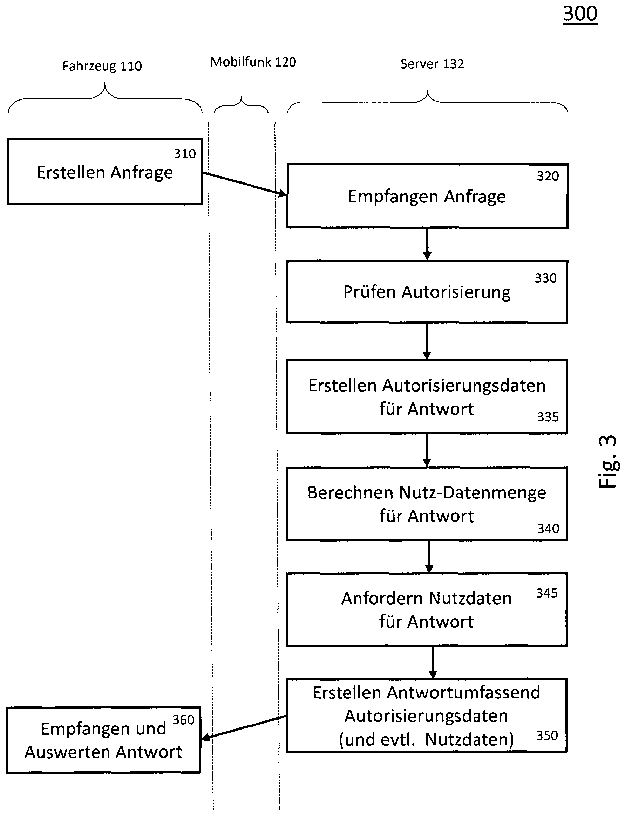

**Figur 2** zeigt beispielhafte Request-Response-Paare 205, die zwischen dem Fahrzeug 210 und dem Server 312 über das Mobilfunknetz bzw. Mobilfunksystem 120 in einem System wie mit Bezug auf **Figur 1** beschrieben und in einem Verfahren wie mit Bezug auf **Figur 3** beschrieben ausgetauscht werden. In diesem Beispiel erfolgt ein Request periodisch zum Zeitpunkt t₀, t₁, ..., t_{N}. Jeder Request 210 und jede Response 215 umfassen Datenblöcke mit einer vordefinierten Datenblock-Länge bzw. Datenblock-Größe M 222. Jeder Request 210 bzw. Autorisierungs-Request 210 kann entsprechend geeignete Daten zur Autorisierung 224 umfassen, wie z.B. eine Identifikation (ID) des Fahrzeugs 110, eine Position des Fahrzeugs 110, etc. Die Daten zur Autorisierung 224 füllen nur einen Teil des Request-Blocks 210 mit der vordefinierten Datengröße M 222.

Wie mit Bezug auf **Figuren 1** und **3** beschrieben, kann das Bearbeiten des Requests 210 durch den Server 132 ein Berechnen einer Nutz-Datenmenge für Nutzdaten 228 des Response-Datenblocks 215, umfassen (Schritt 340). Die Nutz-Datenmenge entspricht der Datenmenge M 222 abzüglich den Daten zur Autorisierung 224. Mit anderen Worten entspricht die Nutz-Datenmenge der Differenz zwischen den Gesamt-Nutzdaten (226+228) der Response 215 und den Autorisierungsdaten 226 der Response 215. Jede Response 215 kann nun mit den Autorisierungsdaten 226 und weiteren Nutzdaten 228 (vgl. **Figuren 1** und **3****)** umfassen. Falls die zu übertragenden Nutzdaten 228 die berechnete Nutz-Datenmenge übersteigen, kann vom Server eine Session aufgebaut und gleichzeitig vorgemerkt werden, dass mit der aktuellen Response 215 nicht alle Nutzdaten 218 übertragen werden konnten. In diesem Fall werden die restlichen Nutzdaten mit einer oder mehreren nachfolgenden Responses 215 versendet (indem diese z.B. in einer Speichereinheit im Server 132 zwischengespeichert werden).

**Figur 3** zeigt ein beispielhaftes Verfahren 300 zur sicheren und effizienten Bereitstellung von zumindest einem zumindest teil-autonomen Fahrmodus eines Fahrzeugs 110 bzw. Kraftfahrzeugs 110. Das Fahrzeug 110 kann beispielsweise eine Steuereinheit umfassen, die einrichtet ist, das Fahrzeug 110 in einem teil- bzw. vollautonomen Fahrmodus ohne bzw. mit nur beschränktem Eingreifen des Fahrers des Fahrzeugs zu bewegen. Beispielsweise kann die Steuereinheit eingerichtet sein, das Fahrzeug 110 von einem Startpunkt einer (Teil-) Fahrstrecke zum Endpunkt der (Teil-) Fahrstrecke autonom zu bewegen. Die Steuereinheit (oder jede andere geeignete Steuereinheit im Fahrzeug 110, die kommunikativ mit der Steuereinheit zum Bewegen des Fahrzeugs verbunden ist), kann ausgebildet sein, einen Request bzw. eine Anfrage zum Abrufen einer Autorisierung der Durchführung des zumindest einen zumindest teilautonomen Fahrmodus (im Folgenden zur Vereinfachung autonomer Fahrmodus genannt) erstellen (Schritt 310) und beispielsweise über ein Mobilfunksystem bzw. Mobilfunknetz 120 an einen Backenserver bzw. Server 132 senden. Die Kommunikation zwischen dem Fahrzeug 110 und dem Server 132 im Backend 130 kann beispielsweise mittels einer Public-Key-Infrastruktur bzw. Public-Key-Infrastructure (PKI) zur Überprüfung der Vertrauenswürdigkeit des Servers 132 und/oder des Fahrzeugs 110 umfassend eine Trusted-Third-Party TTP erfolgen.

Das Fahrzeug 110 kann eine Anfrage bzw. Request 210 (wie weiter oben mit Bezug auf **Figur 2** erläutert) zum Abrufen einer Autorisierung einer Durchführung des zumindest einen zumindest teil-autonomen Fahrmodus erstellen. Das Fahrzeug 110 den Request 210 vordefinierbaren bzw. vordefinierten Ereignissen erstellen und das Verfahren 300 somit starten. Um die Fahrsicherheit bei der Durchführung des autonomen Fahrmodus des Fahrzeugs 110 zu gewährleisten, kann die Erstellung des (Autorisierungs-) Requests 210 durch das Fahrzeug 110 beispielsweise erfolgen:
- vor jeder manuellen Aktivierung des autonomen Fahrmodus durch den Fahrer;
- vor jeder automatischen Aktivierung des autonomen Fahrmodus durch ein entsprechendes Steuergerät (z.B. nach Auffahrt auf eine Autobahn, um einen autonomen Fahrmodus auf der Autobahn zu initiieren);
- in regelmäßigen zeitlichen Abständen t₀, t₁, ..., t_{N} (vgl. **Figur 2****);** und/oder
- zu jedem anderen geeigneten Zeitpunkt.

Dabei kann festgelegt werden, dass, falls die Erstellung des Requests 210 durch das Fahrzeug 110 nicht zu den vordefinierbaren bzw. vordefinierten Ereignissen möglich ist, das Ausführen bzw. Fortführen des zumindest einen zumindest teil-autonomen Fahrmodus im Fahrzeug 110 situationsbedingt für einen vorbestimmten Zeit- und/oder Ortsraum erfolgt. Es kann beispielsweise aufgrund einer Nicht-Verfügbarkeit des Mobilfunknetzes (z.B. Tunnel, Netzüberlastung), dazu kommen, dass das Erstellen des Requests 210 durch das Fahrzeug 110 zum notwendigen bzw. rechtzeitigen Zeitpunkt nicht erfolgen kann. In diesem Fall kann der autonome Fahrmodus (falls anwendbar: situationsbedingt, z.B. wenn sich der ausgeführte teilautonome Fahrmodus auf Autobahnfahrten/innerstädtische Fahrten beschränkt und die Fahrt auf der Autobahn fortgeführt wird) für einen vorbestimmten Zeitraum (z.B. 1 Minute (min), 2 min, 5 min etc.) und/oder Ortsraum (z.B. alle 1 Kilometer (km), alle 2 km, alle 5 km, etc.) ausgeführt bzw. fortgeführt werden (je nachdem, ob der autonome Fahrmodus bereits ausgeführt wird). Dabei kann der vorbestimmte Zeit- und/oder Ortsraum der Fortführung situationsbedingt parametrisiert werden. Beispielsweise kann der vorbestimmte Zeitraum und/oder Ortsraum bei Autobahnfahrten länger und bei innerstädtischen Fahrten kürzer gewählt werden, beispielsweise da auf Autobahnen eine geringere Gefahr von einem eigentlich nicht mehr berechtigten Fahrzeug ausgeht.

Der Request bzw. Autorisierungs-Request 210 kann entsprechend geeignete Daten 224 umfassen, wie z.B. eine Identifikation (ID) des Fahrzeugs 110, eine Position des Fahrzeugs 110, etc. Bei dem Request 210 kann es sich um einen Datenblock einer vordefinierten Länge M 222 handeln, der die geeigneten bzw. erforderlichen Daten zur Autorisierungsanfrage 224 (z.B. ID des Fahrzeugs 110, Position des Fahrzeugs 110) umfasst, wobei der Rest des Request-Datenblocks 210 mit so genannten Dummy-Bits 225 aufgefüllt werden kann (so genanntes Padding). Die Verwendung von Datenblöcken einer vordefinierbaren bzw. vordefinierten Länge M 222 ist üblich bei der Datenübertragung gängiger Mobilfunksysteme bzw. Mobilfunknetze 120 (so genannte Blockrundung).

Nachdem der adressierte Server 132 den Request 210 über das Mobilfunksystem bzw. Mobilfunknetz 120 empfängt (Schritt 320) kann der Server 132 die geeigneten Daten 224 (z.B. ID des Fahrzeugs 110, Position des Fahrzeugs 110) aus dem Request-Datenblock 210 extrahieren und bearbeiten. Insbesondere wird bei der Bearbeitung des Requests bzw. Request-Datenblocks 210 die Autorisierung des Fahrzeugs 110 zum Ausführen des autonomen Fahrmodus geprüft (Schritt 330). Beispielsweise kann der Server 132 durch Abfragen von in einer Speichereinheit 135A ... 135N hinterlegten Daten und/oder durch Anfordern entsprechender Daten von einem oder mehreren weiteren Anwendungs-bzw. Applikationsservern 137 überprüfen, ob
- ein Sicherheitsproblem mit Bezug auf das Fahrzeug 110 vorliegt;
- das Fahrzeug 110 typbedingt für den beabsichtigten autonomen Fahrmodus autorisiert ist; und/oder
- das Fahrzeug 110 individuell für den beabsichtigten autonomen Fahrmodus autorisiert ist.

Diese Daten können beispielsweise für alle Fahrzeuge, die zumindest einen zumindest teilautonomen Fahrmodus aufweisen, in einer oder mehreren Datenbanken 135 A ... 135 N beispielsweise nach einem geeigneten Registrierungsprozess über ein oder mehrere entsprechend geeignete Registrierungsserver (nicht gezeigt) hinterlegt sein.

Nach der Prüfung der Autorisierung des Fahrzeugs 110 zum Ausführen des autonomen Fahrmodus (Schritt 330) kann der Server 132 Autorisierungsdaten 226 für die Response bzw. den Response -Datenblock 215 erstellen (Schritt 335). Die Autorisierungsdaten 226 können eine Autorisierungsbestätigung oder eine Autorisierungsverweigerung umfassen. Beispielsweise können die Autorisierungsdaten 226 eine Autorisierungsbestätigung umfassen, wenn festgestellt wurde, dass
- kein Sicherheitsproblem mit Bezug auf das Fahrzeug 110 vorliegt; und/oder
- das Fahrzeug 110 typbedingt für den beabsichtigten autonomen Fahrmodus autorisiert ist; und/oder
- das Fahrzeug individuell für den beabsichtigten autonomen Fahrmodus autorisiert ist.

Falls ein Sicherheitsproblem vorliegt und/oder das Fahrzeug 110 nicht (typbedingt oder individuell) für den beabsichtigten Fahrmodus autorisiert ist, umfassen die Autorisierungsdaten 226 eine Autorisierungsverweigerung.

Das Bearbeiten des Requests 210 durch den Server 132 kann auch ein Berechnen einer Nutz-Datenmenge für Nutzdaten des Response-Datenblocks 215, umfassen (Schritt 340). Diese Nutz-Datenmenge kann die Differenz zwischen den Gesamt-Nutzdaten (226+228) und den Autorisierungsdaten 226 der Response 215 sein. Der Server 132 kann daraufhin Nutzdaten 228 für die Response bzw. den Response-Datenblock 215 von ein oder mehreren Speichereinheiten (135 A ... 135 N) bzw. weiteren Applikationsservern 137 anfordern (Schritt 345), wobei die angeforderten Nutzdaten 228 der berechneten Nutz-Datenmenge entsprechen. Bei den Nutzdaten 228 kann es sich beispielsweise um ein oder mehrere der folgenden Daten bzw. Datentypen handeln:
Daten hinsichtlich einer Aktualisierung einer im Fahrzeug 110 vorgehaltenen digitalen Straßenkarte (z.B. neue Baustellen, neue Straßenführung, etc.);
Daten hinsichtlich zeitaktueller Situationen im Straßenverkehr (z.B. aktuelle Verkehrslage, aktuelle Unfälle, aktuelle Straßensperren, etc.);
Daten hinsichtlich zeitaktueller Umwelteinflüsse (z.B. Blitzeis, starke Windböen, etc.); und/oder
weitere geeignete Daten.

Beim Erstellen der Response bzw. des Response-Datenblocks 215 durch den Server 132 (Schritt 350) kann der entsprechende Datenblock 215 zu den Autorisierungsdaten 226 die angeforderten Nutzdaten 228 umfassen. Falls die zu übertragenden Nutzdaten 228 die berechnete Nutz-Datenmenge übersteigen, kann vom Server 132 eine Session aufgebaut werden und gleichzeitig vorgemerkt werden, dass mit der aktuellen Response 215 nicht alle Nutzdaten 218 übertragen werden konnten. In diesem Fall werden die restlichen Nutzdaten mit einer oder mehreren nachfolgenden Responses 215 versendet.

Die Response bzw. der Response-Datenblock 215 wird nun an das Fahrzeug 110 über das Mobilfunknetz bzw. Mobilfunksystem 120 gesendet. Das Fahrzeug 110 Empfängt die Response 215 und wertet diese entsprechend aus (Schritt 360). Umfassen die Autorisierungsdaten 226 der Response 215 eine Autorisierungsbestätigung, kann der autonome Fahrmodus (beispielsweise durch die o.g. Steuereinheit) aus- bzw. fortgeführt werden, je nachdem, ob der autonome Fahrmodus bereits ausgeführt wird. Umfassen die Autorisierungsdaten 226 hingegen eine Autorisierungsverweigerung, kann der autonome Fahrmodus verweigert bzw. abgebrochen werden, je nachdem, ob der autonome Fahrmodus bereits ausgeführt wird. Werden mit der Response 215 auch Nutzdaten 228 empfangen, können diese entsprechend zur Ausführung des autonomen Fahrmodus verarbeitet werden (z.B. Aktualisierung der digitalen Karte, Aktualisierung zeitaktueller Situationen im Straßenverkehr und/oder Aktualisierung zeitaktueller Umwelteinflüsse, etc.).

Das mit Bezug auf **Figuren 1**, **2** und **3** beschriebene System und Verfahren sowie die Request-Response-Paare 205 ermöglichen somit vorteilhafter Weise einen Manipulationsschutz hinsichtlich der Autorisierung von autonomen Fahrmodi in Fahrzeugen, da eine Autorisierung der Fahrmodi von jedem entsprechenden Fahrzeug bevorzugt in periodischen Abständen abgefragt wird. Gleichzeitig ermöglicht das "Auffüllen" der Response-Datenblöcke 215 zusätzlich zu den Autorisierungsdaten 226 mit Nutzdaten 228 (die ohnehin an jedes Fahrzeug 210 bzw. zumindest jedes Fahrzeug 210 mit zumindest einem zumindest teilautonomen Fahrmodus über die Luftschnittstelle übertragen werden müssen) eine optimale Ausnutzung der Datenblöcke 215 einer vordefinierten Größe M 222, die bei gängigen Mobilfunkanbietern Anwendung finden. Mit anderen Worten, die Autorisierungsdaten 226, die als so genannte "Heartbeats" ausgestaltet sein können, füllen nur einen geringen Anteil der Datenblöcke aus. Durch das Auffüllen der Datenblöcke mit Nutzdaten 228 wird die Überlastung der Mobilfunkinfrastruktur bzw. des Mobilfunknetzes 120 vermieden. Somit können die kommerziellen und/oder technisch begründeten Mengenrundungsalgorithmen (d.h. wie groß ist ein Datenblock 222) optimal ausgenutzt werden. Da die Autorisierungsanfragen bzw. Requests 210 zyklisch erfolgen, kann die Übertragung der Nutzdaten 228 - falls erforderlich - über mehrere Request-Response-Paare 205 verteilt erfolgen.

Durch die Kombination der Autorisierungs-Request-Response-Paaren 205 mit den Nutzdaten 228 wird die Sicherheit bei der Durchführung autonomer Fahrmodi im Fahrzeug 210 erhöht, wobei gleichzeitig ein Bandbreiten-optimierter Datenaustausch zwischen dem Server 132 und entsprechenden Fahrzeugen 210 mit Bezug auf die Mobilfunkinfrastruktur 120 stattfindet. Somit wird gleichzeitig eine sichere und effiziente Bereitstellung von autonomen Fahrmodi ermöglicht.

## Patentansprüche

1. Verfahren (300) zur sicheren und effizienten Bereitstellung von zumindest einem zumindest teil-autonomen Fahrmodus eines Fahrzeugs (110), umfassend:
Erstellen (310) eines Requests (210) durch das Fahrzeug (110) zum Abrufen einer Autorisierung einer Durchführung des zumindest einen zumindest teil-autonomen Fahrmodus;
Empfangen (320) des Requests (210) an einem Server (132);
Prüfen (330) der Autorisierung der Durchführung des zumindest einen zumindest teilautonomen Fahrmodus,
- wobei das Prüfen (330) der Autorisierung das Prüfen, ob ein Sicherheitsproblem mit Bezug auf das Fahrzeug (110) vorliegt, umfasst; und
- wobei das Sicherheitsproblem mit Bezug auf das Fahrzeug (110) die Kompromittierung von zumindest einem Steuergerät durch einen vorangegangenen Hacker-Angriff umfasst;
Erstellen (335) von der Prüfung entsprechenden Autorisierungsdaten (226); und
Erstellen (350) einer Response (215) umfassend die Autorisierungsdaten (226); und
Empfangen und Auswerten (360) der Response (215) im Fahrzeug (110).

2. Verfahren (300) gemäß Anspruch 1, wobei die Autorisierungsdaten (226) eine Autorisierungsbestätigung oder eine Autorisierungsverweigerung umfassen und wobei das Auswerten (360) der Response (215) im Fahrzeug (100) umfasst:
falls die Autorisierungsdaten (226) eine Autorisierungsbestätigung umfassen: Ausführen bzw. Fortführen des zumindest einen zumindest teil-autonomen Fahrmodus im Fahrzeug (110); und
falls die Autorisierungsdaten (226) einen Autorisierungsverweigerung umfassen: Verweigern oder Abbrechen des zumindest einen zumindest teil-autonomen Fahrmodus im Fahrzeug (110).

3. Verfahren (300) gemäß einem der vorangehenden Ansprüche, zudem umfassend:
Berechnen (332), durch den Server (132), einer Nutz-Datenmenge für Nutzdaten (228) der Response (215), wobei die Nutz-Datenmenge die Differenz zwischen den Gesamt-Nutzdaten und den Autorisierungsdaten (226) der Response (215) ist; und
Anfordern (342) von Nutzdaten (228) für die Response, wobei die angeforderten Nutzdaten (228) der berechneten Nutz-Datenmenge entsprechen;
wobei die Response (215) zu den Autorisierungsdaten (226) die angeforderten Nutzdaten (228) enthält; und
wobei das Auswerten (360) der Response (215) im Fahrzeug (100) zudem das Auswerten der Nutzdaten (228) umfasst.

4. Verfahren (300) gemäß Anspruch 3, wobei die Nutzdaten (228) ein oder mehrere der folgenden Daten umfassen:
Daten hinsichtlich einer Aktualisierung einer im Fahrzeug (110) vorgehaltenen digitalen Straßenkarte;
Daten hinsichtlich zeitaktueller Situationen im Straßenverkehr;
Daten hinsichtlich zeitaktueller Umwelteinflüsse.

5. Verfahren (300) gemäß einem der vorangehenden Ansprüche, wobei das Erstellen des Requests (210) durch das Fahrzeug (110) zu vordefinierbaren Ereignissen erfolgt.

6. Verfahren (300) gemäß Anspruch 5, wobei, wenn das Erstellen des Requests (210) durch das Fahrzeug (110) zu den vordefinierbaren Ereignissen nicht möglich ist, das Ausführen bzw. Fortführen des zumindest einen zumindest teil-autonomen Fahrmodus im Fahrzeug (110) für einen vorbestimmten Zeit- und/oder Ortsraum situationsbedingt erfolgt.

7. System (100) zur sicheren und effizienten Bereitstellung von zumindest einem zumindest teil-autonomen Fahrmodus eines Fahrzeugs (110), umfassend:
zumindest einen Server (132), der eingerichtet ist, folgende Schritte durchzuführen:
- Empfangen (320) eines vom Fahrzeug (110) erstellten Requests (210) zum Abrufen einer Autorisierung einer Durchführung des zumindest einen zumindest teilautonomen Fahrmodus von dem Fahrzeug (110);
- Prüfen (330) der Autorisierung der Durchführung des zumindest einen zumindest teil-autonomen Fahrmodus des Fahrzeugs (110),
▪ wobei das Prüfen (330) der Autorisierung das Prüfen, ob ein Sicherheitsproblem mit Bezug auf das Fahrzeug (110) vorliegt, umfasst; und
▪ wobei das Sicherheitsproblem mit Bezug auf das Fahrzeug (110) die Kompromittierung von zumindest einem Steuergerät durch einen vorangegangenen Hacker-Angriff umfasst;
- Erstellen (335) von der Prüfung entsprechenden Autorisierungsdaten (226); und
- Erstellen (350) einer Response (215) umfassend die Autorisierungsdaten (226);
zumindest ein Fahrzeug (110) zum Erstellen des Requests (210) und zum Empfangen und Auswerten (360) der Response (215).

8. System (100) nach Anspruch 7, wobei die Autorisierungsdaten (226) eine Autorisierungsbestätigung oder eine Autorisierungsverweigerung umfassen und wobei das Auswerten (360) der Response (215) umfasst,
falls die Autorisierungsdaten (226) eine Autorisierungsbestätigung umfassen: Ausführen bzw. Fortführen des zumindest einen zumindest teil-autonomen Fahrmodus im Fahrzeug (110); und
falls die Autorisierungsdaten (226) einen Autorisierungsverweigerung umfassen: Verweigern oder Abbrechen des zumindest einen zumindest teil-autonomen Fahrmodus im Fahrzeug.

9. System (100) gemäß einem der Ansprüche 7 oder 8, wobei das Erstellen (350) der Response (215) durch den Server (132) zudem umfasst:
Berechnen (340) einer Nutz-Datenmenge für Nutzdaten (228) der Response (215), wobei die Nutz-Datenmenge die Differenz zwischen den Gesamt-Nutzdaten und den Autorisierungsdaten (226) der Response (215) ist;
Anfordern (342) von Nutzdaten (228) für die Response (215), wobei die angeforderten Nutzdaten (228) der berechneten Nutz-Datenmenge entsprechen;
wobei die Response (215) zu den Autorisierungsdaten (226) die angeforderten Nutzdaten (228) umfasst; und
wobei das Auswerten (360) der Response (215) im Fahrzeug (100) zudem das Auswerten der Nutzdaten (228) umfasst;
wobei die Nutzdaten (228) ein oder mehrere der folgenden Daten umfassen können:
Daten hinsichtlich einer Aktualisierung einer im Fahrzeug (110) vorgehaltenen digitalen Straßenkarte;
Daten hinsichtlich zeitaktueller Situationen im Straßenverkehr;
Daten hinsichtlich zeitaktueller Umwelteinflüsse.

10. System (100) gemäß einem der Ansprüche 7 bis 9, wobei das Fahrzeug (110) zu vordefinierbaren Ereignissen den Request (210) erstellt;
wobei, wenn das Erstellen des Requests (210) durch das Fahrzeug (110) zu den vordefinierbaren Ereignissen nicht möglich ist, das Ausführen bzw. Fortführen des zumindest einen zumindest teil-autonomen Fahrmodus im Fahrzeug (110) für einen vorbestimmten Zeit- und/oder Ortsraum situationsbedingt erfolgt.

## Claims

1. Method (300) for the secure and efficient provision of at least one at least partly autonomous driving mode of a vehicle (110), comprising:
creation (310) of a request (210) by the vehicle (110) to retrieve an authorization to perform the at least one at least partly autonomous driving mode;
reception (320) of the request (210) at a server (132);
checking (330) of the authorization to perform the at least one at least partly autonomous driving mode,
- wherein the checking (330) of the authorization comprises checking whether there is a security problem in relation to the vehicle (110); and
- wherein the security problem in relation to the vehicle (110) comprises the compromising of at least one controller by a previous hacker attack;
creation (335) of authorization data (226) corresponding to the check; and
creation (350) of a response (215) comprising the authorization data (226); and
reception and evaluation (360) of the response (215) in the vehicle (110).

2. Method (300) according to Claim 1, wherein the authorization data (226) comprise an authorization confirmation or an authorization denial, and wherein the evaluation (360) of the response (215) in the vehicle (100) comprises:
if the authorization data (226) comprise an authorization confirmation: executing or continuing the at least one at least partly autonomous driving mode in the vehicle (110); and
if the authorization data (226) comprise an authorization denial: denying or interrupting the at least one at least partly autonomous driving mode in the vehicle (110).

3. Method (300) according to either of the preceding claims, additionally comprising:
calculation (332), by the server (132), of a payload data quantity for payload data (228) of the response (215), wherein the payload data quantity is the difference between the overall payload data and the authorization data (226) of the response (215); and
requesting (342) payload data (228) for the response, wherein the requested payload data (228) correspond to the calculated payload data quantity;
wherein the response (215) to the authorization data (226) contains the requested payload data (228); and
wherein the evaluation (360) of the response (215) in the vehicle (100) additionally comprises the evaluation of the payload data (228).

4. Method (300) according to Claim 3, wherein the payload data (228) comprise one or more of the following data:
data in relation to an update of a digital road map contained in the vehicle (110);
data in relation to current situations in the road traffic;
data in relation to current environmental influences.

5. Method (300) according to one of the preceding claims, wherein the request (210) is created by the vehicle (110) upon predefinable events.

6. Method (300) according to Claim 5, wherein, if it is not possible for the vehicle (110) to create the request (210) upon the predefinable events, the at least one at least partly autonomous driving mode is executed or continued in the vehicle (110) for a predetermined time interval and/or location interval depending on the situation.

7. System (100) for the secure and efficient provision of at least one at least partly autonomous driving mode of a vehicle (110), comprising:
at least one server (132) that is configured to perform the following steps:
- receiving (320) a request (210), created by the vehicle (110), to retrieve an authorization for the vehicle (110) to perform the at least one at least partly autonomous driving mode;
- checking (330) the authorization to perform the at least one at least partly autonomous driving mode of the vehicle (110),
▪ wherein the checking (330) of the authorization comprises checking whether there is a security problem in relation to the vehicle (110); and
▪ wherein the security problem in relation to the vehicle (110) comprises the compromising of at least one controller by a previous hacker attack;
- creating (335) authorization data (226) corresponding to the check; and
- creating (350) a response (215) comprising the authorization data (226);
at least one vehicle (110) for creating the requests (210) and for receiving and evaluating (360) the response (215) .

8. System (100) according to Claim 7, wherein the authorization data (226) comprise an authorization confirmation or an authorization denial, and wherein the evaluation (360) of the response (215) comprises,
if the authorization data (226) comprise an authorization confirmation: executing or continuing the at least one at least partly autonomous driving mode in the vehicle (110); and
if the authorization data (226) comprise an authorization denial: denying or interrupting the at least one at least partly autonomous driving mode in the vehicle.

9. System (100) according to either of Claims 7 and 8, wherein the creation (350) of the response (215) by the server (132) additionally comprises:
calculation (340) of a payload data quantity for payload data (228) of the response (215), wherein the payload data quantity is the difference between the overall payload data and the authorization data (226) of the response (215);
requesting (342) payload data (228) for the response (215), wherein the requested payload data (228) correspond to the calculated payload data quantity;
wherein the response (215) to the authorization data (226) comprises the requested payload data (228); and
wherein the evaluation (360) of the response (215) in the vehicle (100) additionally comprises the evaluation of the payload data (228);
wherein the payload data (228) may comprise one or more of the following data:
data in relation to an update of a digital road map contained in the vehicle (110);
data in relation to current situations in the road traffic;
data in relation to current environmental influences.

10. System (100) according to one of Claims 7 to 9, wherein the vehicle (110) creates the request (210) upon predefinable events;
wherein, if it is not possible for the vehicle (110) to create the request (210) upon the predefinable events, the at least one at least partly autonomous driving mode is executed or continued in the vehicle (110) for a predetermined time interval and/or location interval depending on the situation.

## Revendications

1. Procédé (300) pour la mise à disposition sûre et efficace d'au moins un mode de conduite au moins semi-autonome d'un véhicule (110), comprenant :
la création (310) d'une requête (210) par le véhicule (110) pour la récupération d'une autorisation d'une exécution de l'au moins un mode de conduite au moins semi-autonome ;
la réception (320) de la requête (210) par un serveur (132) ;
la vérification (330) de l'autorisation d'exécution de l'au moins un mode de conduite au moins semi-autonome,
- la vérification (330) de l'autorisation comprenant la vérification de la présence ou non d'un problème de sécurité concernant le véhicule (110) ; et
- le problème de sécurité concernant le véhicule (110) comprenant la compromission d'au moins un calculateur par une attaque de piratage préalable ;
la création (335) de données d'autorisation (226) correspondant à la vérification ; et
la création (350) d'une réponse (215) comprenant les données d'autorisation (226) ; et
la réception et l'évaluation (360) de la réponse (215) dans le véhicule (110).

2. Procédé (300) selon la revendication 1, dans lequel les données d'autorisation (226) comprennent une confirmation d'autorisation ou un refus d'autorisation, et dans lequel l'évaluation (360) de la réponse (215) dans le véhicule (100) comprend :
dans le cas où les données d'autorisation (226) comprennent une confirmation d'autorisation :
l'exécution ou la poursuite d'au moins un mode de conduite au moins semi-autonome dans le véhicule (110) ; et
dans le cas où les données d'autorisation (226) comprennent un refus d'autorisation : le refus ou l'annulation de l'au moins un mode de conduite au moins semi-autonome dans le véhicule (110).

3. Procédé (300) selon l'une des revendications précédentes, comprenant en outre :
le calcul (332), par le serveur (132), d'une quantité de données utiles pour les données utiles (228) de la réponse (215), la quantité de données utiles étant la différence entre la totalité des données utiles et les données d'autorisation (226) de la réponse (215) ; et
la demande (342) de données utiles (228) pour la réponse, les données utiles (228) demandées correspondant à la quantité de données utiles calculée ;
la réponse (215) aux données d'autorisation (226) contenant les données utiles (228) demandées ; et
l'évaluation (360) de la réponse (215) dans le véhicule (100) comprenant en outre l'évaluation des données utiles (228) .

4. Procédé (300) selon la revendication 3, dans lequel les données utiles (228) comprennent une ou plusieurs des données suivantes :
des données relatives à une mise à jour d'une carte routière numérique stockée dans le véhicule (110) ;
des données relatives à des situations en temps réel dans la circulation routière ;
des données relatives à des influences environnementales en temps réel.

5. Procédé (300) selon l'une des revendications précédentes, dans lequel la création de la requête (210) par le véhicule (110) est effectuée lors d'événements prédéfinissables.

6. Procédé (300) selon la revendication 5, dans lequel, lorsque la création de la requête (210) par le véhicule (110) lors d'événements prédéfinissables n'est pas possible, l'exécution ou la poursuite de l'au moins un mode de conduite au moins semi-autonome dans le véhicule (110) pour un intervalle de temps et/ou un lieu prédéterminés est effectuée en fonction de la situation.

7. Système (100) pour la mise à disposition sûre et efficace d'au moins un mode de conduite au moins semi-autonome d'un véhicule (110), comprenant :
au moins un serveur (132) conçu pour exécuter les étapes suivantes comprenant :
- la réception (320) d'une requête (210) créée par le véhicule (110) pour demander au véhicule (110) une autorisation de mise en œuvre de l'au moins un mode de conduite au moins semi-autonome ;
- la vérification (330) de l'autorisation d'exécution de l'au moins un mode de conduite au moins semi-autonome du véhicule (110),
▪ la vérification (330) de l'autorisation comprenant la vérification de la présence ou non d'un problème de sécurité concernant le véhicule (110) ; et
▪ le problème de sécurité concernant le véhicule (110) comprenant la compromission d'au moins un calculateur par une attaque de piratage préalable ;
- la création (335) de données d'autorisation (226) correspondant à la vérification ; et
- la création (350) d'une réponse (215) comprenant les données d'autorisation (226) ;
au moins un véhicule (110) destiné à créer la requête (210) et à recevoir et évaluer (360) la réponse (215).

8. Système (100) selon la revendication 7, dans lequel les données d'autorisation (226) comprennent une confirmation d'autorisation ou un refus d'autorisation, et dans lequel l'évaluation (360) de la réponse (215) comprend,
dans le cas où les données d'autorisation (226) comprennent une confirmation d'autorisation :
l'exécution ou la poursuite d'au moins un mode de conduite au moins semi-autonome dans le véhicule (110) ; et
dans le cas où les données d'autorisation (226) comprennent un refus d'autorisation : le refus ou l'annulation de l'au moins un mode de conduite au moins semi-autonome dans le véhicule.

9. Système (100) selon l'une des revendications 7 ou 8, dans lequel la création (350) de la réponse (215) par le serveur (132) comprend en outre :
le calcul (340) une quantité de données utiles pour les données utiles (228) de la réponse (215), la quantité de données utiles étant la différence entre la totalité des données utiles et les données d'autorisation (226) de la réponse (215) ; et
la demande (342) de données utiles (228) pour la réponse (215), les données utiles (228) demandées correspondant à la quantité de données utiles calculée ;
la réponse (215) aux données d'autorisation (226) contenant les données utiles (228) demandées ; et
l'évaluation (360) de la réponse (215) dans le véhicule (100) comprenant en outre l'évaluation des données utiles (228) ;
les données utiles (228) pouvant comprendre une ou plusieurs des données suivantes :
des données relatives à une mise à jour d'une carte routière numérique stockée dans le véhicule (110) ;
des données relatives à des situations en temps réel dans la circulation routière ;
des données relatives à des influences environnementales en temps réel.

10. Système (100) selon l'une des revendications 7 à 9, dans lequel le véhicule (110) crée la requête (210) lors d'événements prédéfinissables ;
dans lequel, lorsque la création de la requête (210) par le véhicule (110) lors des événements prédéfinissables n'est pas possible, l'exécution ou la poursuite de l'au moins un mode de conduite au moins semi-autonome dans le véhicule (110) pour un intervalle de temps et/ou un lieu prédéterminés est effectuée en fonction de la situation.
